**Europäisches Patentamt**

**European Patent Office**

**Office européen des brevets**

(19)

(11) Veröffentlichungsnummer: **0 290 597**
**B1**

(12) **EUROPÄISCHE PATENTSCHRIFT**

(45) Veröffentlichungstag der Patentschrift: **16.01.91**

(51) Int. Cl.⁵: **F 16 D 65/54, F 16 D 55/224**

(21) Anmeldenummer: **88900686.2**

(22) Anmeldetag: **10.11.87**

(86) Internationale Anmeldenummer:
**PCT/EP87/00694**

(87) Internationale Veröffentlichungsnummer:
**WO 88/03614 19.05.88 Gazette 88/11**

(54) **TEILBELAG-SCHEIBENBREMSE MIT RÜCKSTELLVORRICHTUNG.**

(30) Priorität: **11.11.86 DE 8630214 u**
**31.08.87 DE 8711776 u**

(43) Veröffentlichungstag der Anmeldung:
**17.11.88 Patentblatt 88/46**

(45) Bekanntmachung des Hinweises auf die
Patenterteilung:
**16.01.91 Patentblatt 91/03**

(84) Benannte Vertragsstaaten:
**DE FR GB IT**

(56) Entgegenhaltungen:
**EP-A-0 068 613**
**DE-A-2 722 620**
**DE-A-2 925 275**
**DE-B-1 211 448**
**FR-A-2 558 911**
**GB-A- 578 038**
**GB-A-1 600 998**

(73) Patentinhaber: **LUCAS INDUSTRIES public**
**limited company**
**Great King Street**
**Birmingham, B19 2XF West Midlands (GB)**

(72) Erfinder: **ERBEN, Ralf**
**An der Dreispitz 1**
**D-5414 Vallendahr (DE)**
Erfinder: **LANGERT, Albert**
**Feldkircherstr. 23**
**D-5450 Neuwied 12 (DE)**
Erfinder: **MADZGALLA, Hans-Georg**
**Kurfürst-Schönborn-Str. 32**
**D-5400 Koblenz-Kesselheim (DE)**
Erfinder: **MADZGALLA, Frank-Wilhelm**
**Kurfürst-Schönborn-Stra e 32**
**D-5400 Koblenz-Kesselheim (DE)**

(74) Vertreter: **von Hellfeld, Axel, Dipl.-Phys. Dr. et al**
**Wuesthoff & Wuesthoff Patent- und**
**Rechtsanwälte Schweigerstrasse 2**
**D-8000 München 90 (DE)**

Courier Press, Leamington Spa, England.

**Beschreibung**

Die Erfindung betrifft eine Teilbelag-Scheibenbremse, insbesondere für Kraftfahrzeuge, mit den Merkmalen des Oberbegriffs des Patentanspruchs 1.

Bei einer bekannten Scheibenbremse (DE—C1 22 11 429) sind die Gleitstifte am Schwimmsattel lösbar befestigt und in je einer Bohrung des Bremsträgers verschiebbar geführt. Bei gattungsgemäßen Scheibenbremsen ist es aber grundsätzlich auch möglich, daß die Gleitstifte am Bremsträger befestigt und in je einer Bohrung des Schwimmsattels geführt sind. In beiden Fällen ist der Schwimmsattel beim Betätigen der Bremse derart verschiebbar, daß die in bezug auf das zugehörige Fahrzeug äußere Bremsbacke vom Schwimmsattel gegen eine Bremsscheibe gedrückt wird, wenn die Betätigungsvorrichtung die innere Bremsbacke unmittelbar gegen die Bremsscheibe drückt. Nach dem Betätigen der Bremse ist es erforderlich, daß beide Bremsbacken um eine bestimmte Strecke, das sogenannte Lüftspiel, von der Bremsscheibe wegbewegt werden. Das Lüftspiel soll einerseits groß genug sein, um unter allen Umständen — beispielsweise bei durch Hitze verformter Bremsscheibe oder bei Kurvenfahrt — zu verhindern, daß die Bremsbacken an der Bremsscheibe schleifen. Andererseits soll das Lüftspiel so klein wie möglich sein, damit der beim nächsten Betätigen der Bremse erforderliche Pedalweg nicht unnötig groß wird.

Das Lüftspiel der von der Betätigungsvorrichtung unmittelbar betätigten, in bezug auf das Fahrzeug inneren Bremsbacke wird im allgemeinen von einem ihr zugeordneten Betätigungskolben bestimmt, der von einer in axialer Richtung elastischen Kolbendichtung rückgestellt wird. Für die Aufrechterhaltung eines bestimmten Lüftspiels der äußeren, durch Verschieben des Schwimmsattels betätigbaren Bremsbacke ist hingegen bei gattungsgemäßen Scheibenbremsen die eingangs erwähnte Rückstellvorrichtung an mindestens einem der Gleitstifte verantwortlich.

Bei der beschriebenen bekannten Scheibenbremse haben die Gleitstifte an ihrem in der zugehörigen Bohrung aufgenommenen Ende je eine Ringnut, in der ein Federelement in Form eines elastischen Rings derart aufgenommen ist, daß seine äußere Umfangsfläche an der zylindrischen Wand der Bohrung reibschlüssig anliegt. Das Federelement setzt einer Verschiebung in axialer Richtung einen solchen Reibungswiderstand entgegen, daß sein Querschnitt sich bei einer normalen Bremsbetätigung elastisch verformt und dadurch eine axiale Rückstellkraft aufbaut, die ausreicht, um den Schwimmsattel nach der Bremsbetätigung in dessen ursprüngliche Stellung zurückzustellen. Der Reibungswiderstand zwischen Federelement und Bohrung wird jedoch bei Betätigung der Bremse überwunden, wenn das Lüftspiel infolge Verschleißes der Bremsbacke einen bestimmten Betrag überschritten hat; in diesem Fall wird das Federelement in der Bohrung in eine neue Stellung verschoben, von der aus das Federelement nach dem Lösen der Bremse die Rückstellung des Schwimmsattels bewirkt.

Bei der bekannten Anordnung sind die Maße für das ringförmige Federelement, den Gleitstift und die zugehörige Bohrung mit hinreichend engen Toleranzen einzuhalten, welche Maße für die Größe des Reibungswiderstandes entscheidend sind. Der Reibungswiderstand, nach dessen Überwindung das Federelement sich in der Bohrung verschieben läßt, kann deshalb Schwankungen unterworfen sein. Ist der Reibungswiderstand zu klein, dann kann das Federelement keine für das Rückstellen des Schwimmsattels ausreichende elastische Rückstellkraft aufbauen; ist der Reibungswiderstand zu groß, so wird die durch den Schwimmsattel verschiebbare Bremsbacke beim Betätigen der Bremse mit geringerer Kraft an die Bremsscheibe angepreßt als die unmittelbar von der Betätigungsvorrichtung verschiebbare Bremsbacke.

Aus der GB—A—57 80 38 ist eine Trommelbremse bekannt, bei der eine Rückstellung mittels Federn erfolgt. Die Kupplung wirkt somit nur in einer Richtung und nicht bidirektional.

Aus der EP—A—0068 613 ist eine Rückstellvorrichtung bekannt, ohne eine konische Bohrung.

Die DE—A—2 722 620 beschreibt eine gattungsgemäße Bremse mit einer Rückstellvorrichtung.

Der Erfindung liegt die Aufgabe zugrunde, eine Scheibenbremse der vorstehend beschriebenen Gattung derart weiterzubilden, daß trotz unvermeidlicher Herstellungstoleranzen ihrer für die Rückstellung des Schwimmsattels verantwortlichen Bauteile eine vorgegebene Rückstellkraft in engeren Grenzen eingehalten werden kann.

Die Aufgabe ist erfindungsgemäß mit den Kennzeichnenden Merkmalen des Patentanspruchs 1 gelöst.

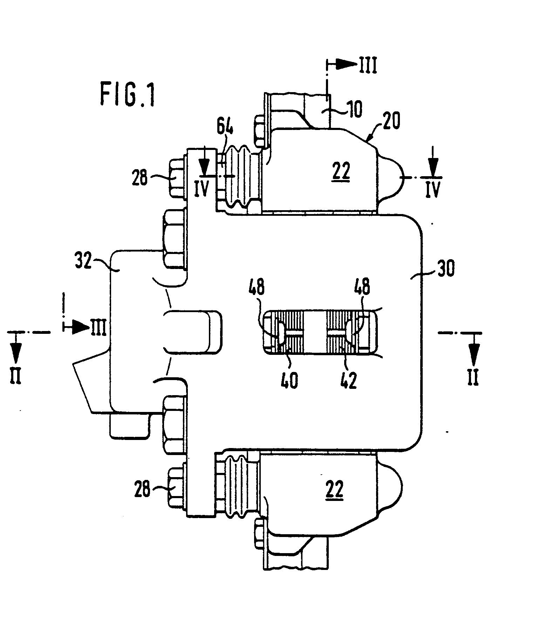

Fig. 1 die Draufsicht einer Teilbelag-Scheibenbremse,

Fig. 2 den axialen Schnitt II—II in Fig. 1,

Fig. 3 die teilweise als radialer Schnitt III—III in Fig. 1 gezeichnete Seitenansicht der Bremse, und

Fig. 4 bis 6 Ausführungsbeispiele von erfindungsgemäßen Teilbelag-Scheibenbremsen.

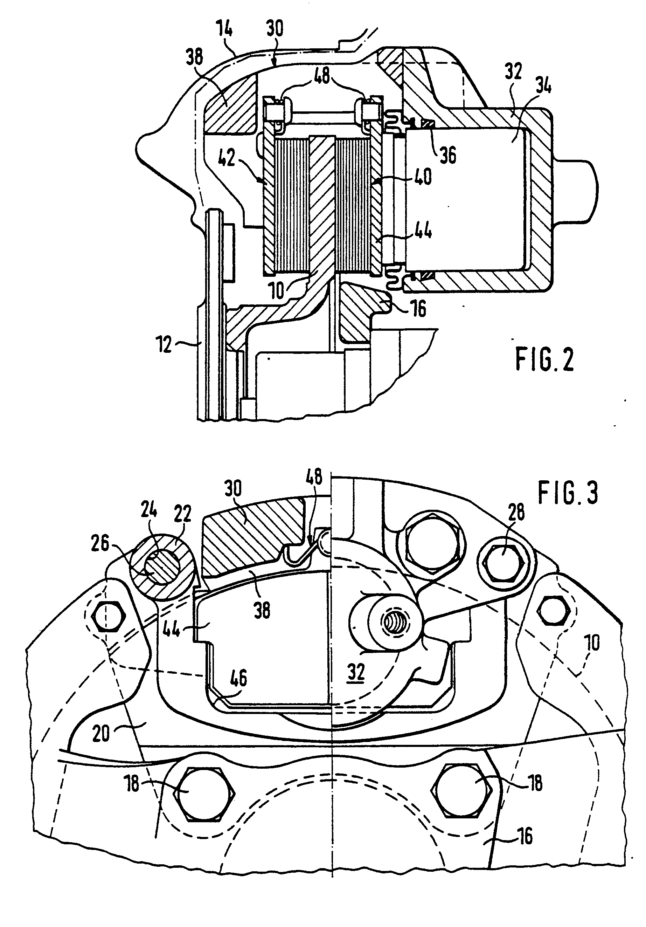

Die dargestellte Teilbelag-Scheibenbremse ist einer Bremsscheibe 10 zugeordnet, die an einer Radnabe 12 befestigt ist. In Fig. 2 ist auch ein Teil einer zugehörigen Radfelge 14 angedeutet. An einem ortsfesten Bauteil 16 ist mittels eines Paares Schrauben 18 ein Bremsträger 20 befestigt, der zwei Arme 22 aufweist. Die Arme 22 erstrekken sich parallel zur Achse der Bremsscheibe 10 über deren äußeren Rand hinweg und weisen je eine achsparallele Bohrung 24 auf. In den Bohrungen 24 ist je ein Gleitstift 26 verschiebbar geführt.

An den beiden Gleitstiften 26 ist mit je einer Schraube 28 ein Schwimmsattel 30 befestigt, der ebenfalls über den radial äußeren Rand der Bremsscheibe 10 hinweggreift. An dem in bezug auf das zugehörige Fahrzeug axial inneren Ende des Schwimmsattels 30 ist eine hydraulische Betätigungsvorrichtung 32 befestigt, die einen Kolben 34 aufweist. Der Kolben 34 ist von einem elastischen Kolbenring 36 umschlossen, der als Abdichtung und zugleich als Rückstellvorrichtung für den Kolben ausgebildet ist. Dem Kolben 34 axial gegenüber ist auf der anderen Seite der Bremsscheibe 10 ein Paar Schenkel 38 am Schwimmsattel 30 ausgebildet. Dem Kolben 34 ist eine von ihm unmittelbar betätigbare, innere Bremsbacke 40 zugeordnet. In entsprechender Weise ist dem Paar Schenkel 38 eine äußere Bremsebacke 42 zugeordnet, die von der Betätigungsvorrichtung 32 mittelbar, durch Verschieben des Schwimmsattels 30 zu betätigen ist.

Jede der beiden Bremsbacken 40 und 42 hat eine Stützplatte 44, die in einer Aussparung 46 des Bremsträgers 20 parallel zur Achse der Bremsscheibe 10 verschiebbar geführt und gegen Kräfte in Umfangsrichtung sowie in radialer Richtung der Bremsscheibe 10 abgestützt ist. An der Stützplatte 44 jeder der beiden Bremsbacken 40 und 42 ist eine Niederhaltefeder 48 gelagert, die sich radial nach außen am Schwimmsattel 30 abstützt und diesen dadurch radial nach außen vorspannt, während sie die Bremsbacken radial nach innen vorspannt und dadurch all diese verschiebbaren Bauteile daran hindert, bei Erschütterungen zu klappern.

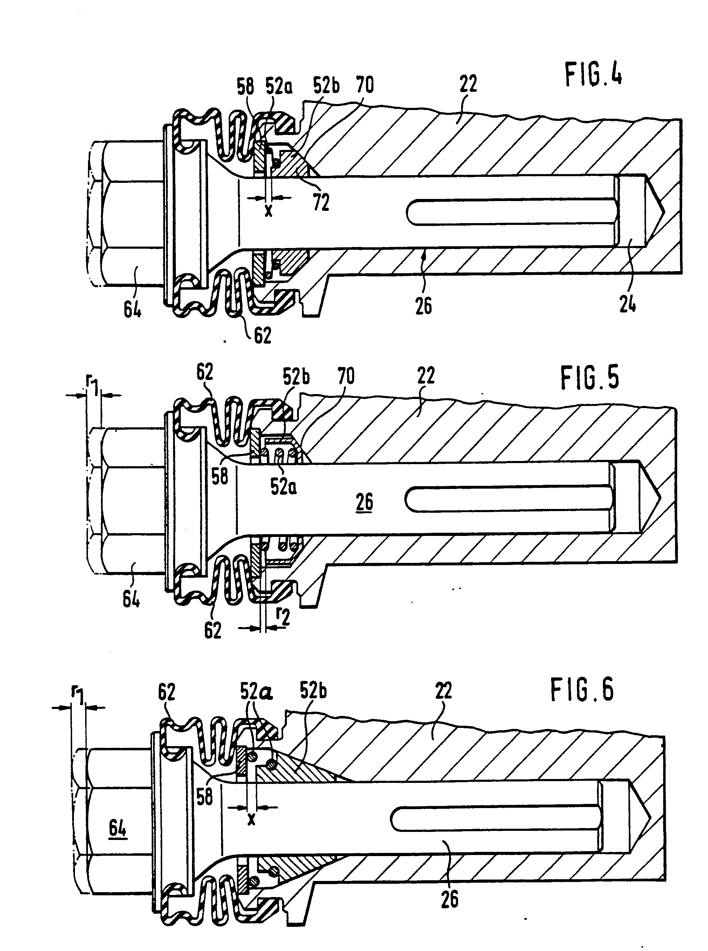

Dem Schwimmsattel 30 ist eine Rückstellvorrichtung gemäß Fig. 4—6 zugeordnet, die bestrebt ist, ihn nach jeder Betätigung, jeweils dann, wenn die Betätigungsvorrichtung 32 drucklos wird, in eine Ruhestellung rückzustellen, in der die äußere Bremsbacke 42 von der ihr zugewandten Fläche der Bremmscheibe 10 einen bestimmten, als Bremslüftspiel bezeichneten Abstand hat, während der Kolbenring 36 für ein entsprechendes Lüftspiel der inneren Bremsbacke 40 sorgt.

Zu der Rückstellvorrichtung gehören Federn 52 (Federelemente 52a, 52b), die rings um je einen der Gleitstifte 26 in je einer Erweiterung am offenen Ende der zugehörigen Bohrung 24 angeordnet sind.

Jede der Rückstellvorrichtungen ist von einer elastischen Manschette 62 umschlossen, die den zugehörigen Arm 22 mit dem zugehörigen Gleitstift 26 dicht verbindet. Jeder der Gleitstifte 26 hat einen außerhalb der zugehörigen Manschette 62 angeordneten Sechskantkopf 64, der sich mit einem Gabelschlüssel erfassen läßt, um den betreffenden Gleitstift am Drehen zu hindern, wenn durch Lösen der zugehörigen Schraube 28 der Schwimmsattel 30 abgebaut werden soll, beispielsweise zum Auswechseln der Bremsbacken 40 und 42.

Beim Betätigen der Bremse wird der Schwimmsattel 30 nach innen, in den Fig. 4 bis 6 nach links verschoben; dabei nimmt jeder der beiden Gleitstifte 26 die enge Windung der zugehörigen Feder 52b mit, so daß in der Feder eine axiale Rückstellkraft aufgebaut wird. Diese Rückstellkräfte sorgen nach dem Lösen der Bremse dafür, daß der Schwimmsattel 30 in seine Ausgangsstellung zurückgestellt wird.

Überschreitet jedoch die beim Betätigen der Bremse stattfindende Bewegung des Schwimmsattels 30 und somit auch der beiden Gleitstifte 26 den vorbestimmten Betrag, um den die enge Windung der Feder 52b innerhalb der zugehörigen Erweiterung beweglich ist, dann findet eine gleitende Relativbewegung zwischen den Gleitstiften und der Feder statt, und deren enge Windung nimmt eine neue Ausgangsstellung auf dem zylindrischen Bereich 66 des zugehörigen Gleitstiftes 26 ein, von der aus der Schwimmsattel 30 beim Lösen der Bremse zurückgestellt wird.

Bei der in Fig. 4 dargestellten Ausführungsform ist die Feder zweigeteilt und weist ein erstes, wendelförmiges Federelement 52a auf sowie ein zweites, als geschlitzter Ring ausgebildetes Federelement 52b. Im eingebauten Zustand ist das zweite, als geschlitzter Ring ausgebildete Federelement 52b radial vorgespannt, während das erste, wendelfederförmig ausgestaltete Federelement 52a in axialer Richtung vorgespannt ist. Die axiale Vorspannung ist wesentlich geringer als die radiale Vorspannung. Als günstiger Wert für die axiale Vorspannung hat sich 2 kp erwiesen, während die radiale Vorspannung so bemessen ist, daß eine Reibkraft zwischen dem geschlitzten Ring und dem Gleitstift 26 erzeugt wird, die zwischen 5 und 10 kp liegt, d.h. die Kraft, die erforderlich ist, um den geschlitzten Ring auf dem Gleitstift zu bewegen, liegt im genannten Bereich.

Gemäß Fig. 4 ist der geschlitzte Ring 52b mit einer konischen Fläche 70 versehen, die komplementär ist zu einer in der Erweiterung der Bohrung 24 ausgebildeten konischen Fläche. Damit wird der Gleitstift 26 und das von ihm getragene Bauteil genau ausgerichtet und ein unerwünschtes Klappern verhindert.

Bei Betätigung der Bremse wird der geschlitzte Ring 52b um die Strecke "x", etwa 0,2 bis 0,6 mm, mit dem Gleitstift 26 bewegt. Die Strecke "x" entspricht dem Lüftspiel. Übersteigt die Bewegung des Gleitstiftes die Strecke "x", so stößt der geschlitzte Ring 52b gegen den starren Ring 58 und wird auf dem Gleitstift 26 entsprechend der Abnutzung der Bremsbeläge verschoben, so daß das Lüftspiel konstant bleibt.

Die Fig. 5 und 6 zeigen weitere Ausführungsbeispiele. Den bisher beschriebenen Ausführungsbeispielen entsprechende Bauteile sind mit gleichen Bezugzeichen versehen.

Beim Ausführungsbeispiel gemäß Fig. 5 ist das zweite Federelement 52b becherförmig ausgestaltet und umhüllt das erste Federelement 52a. Das erste Federelement 52a stützt sich in Fig. 5, links, am Ring 58 ab und drückt rechts das Federelement 52b gegen die konische Fläche 70, so daß das zweite Federelement 52b aufgrund des Abgleitens an der konischen Fläche eine nach innen gerichtete Kraftkomponente erhält und so gegen den Gleitstift 26 gedrückt wird. Die Rückstellwege sind mit den Bezugzeichen $r_1$ und $r_2$ eingezeichnet.

Beim Ausführungsbeispiel gemäß Fig. 6 ist das zweite Federelement 52b konisch ausgeformt und als geschlitzter Ring ausgebildet. Als Material für das zweite Federelement 52b ist Stahl, GuB, Messing oder Kunststoff geeignet. Das erste Federelement 52a umspannt mit seiner in der Figur am weitesten rechts gelegenen Windung in einer Ausnehmung das zweite Federelement 52b und hält dieses zusammen. Dabei wird ein Teil des gewünschten Reibwiderstandes zwischen dem zweiten Federelement 52b und dem Gleitstift 26 erzeugt. Gleichzeitig drückt das erste Federelement 52a in axialer Richtung gegen das zweite Federelement 52b, so daß dieses an der konischen Fläche abgleitet, wodurch ebenfalls eine radial nach innen gerichtete Kraftkomponente auf das zweite Federelement 52b wirkt.

Bei allen Ausführungsbeispielen besteht zwischen dem Gleitstift 26 und der ihn aufnehmenden Bohrung in den Armen 22 des Bremsträgers 20 ein geringes Spiel, welches durch Toleranzen bei der Herstellung bedingt ist. Durch die bei den beschriebenen Ausführungsbeispielen vorgesehene Fixierung wird der Gleitstift 26 in der Bohrung zentriert und ein Verkanten des Gleitstiftes positiv verhindert. Hierdurch wird eine leichte Gängigkeit der Bremse gewährleistet.

**Patentansprüche**

1. Teilbelag-Scheibenbremse, insbesondere für Kraftfahrzeuge, mit

einem Schwimmsattel (30), der mittels Gleitstiften (26) an einem Bremsträger (20) verschiebbar geführt ist,

einer inneren und einer äußeren Bremsbacke (40, 42), die in bezug auf den Bremsträger (20) parallel zu den Gleitstiften (26) verschiebbar sind,

einer Betätigungsvorrichtung (32), mit der die innere Bremsbacke (40) unmittelbar und die äußere Bremsbacke (42) durch Verschieben des Schwimmsattels (30) betätigbar ist und

einer Rückstellvorrichtung an mindestens einem der Gleitstifte (26), mit einer Feder (52), die rings um den Gleitstift (26) als Bestandteil einer reibschlüssigen Verbindung zwischen diesem und einer ihn führenden Bohrung (24) angeordnet und in axialer Richtung begrenzt elastisch nachgiebig ist, wobei

die Bohrung (24) an einem Ende, von dem aus der zugehörige Gleitstift (26) in sie eingesetzt ist, eine Erweiterung aufweist, in welcher die Feder mit Vorspannung eingebaut ist, dadurch gekennzeichnet,

daß eine Außenfläche des Gleitstiftes (26) mit der Feder (52) zusammenwirkt,

daß die Feder (52) zwischen einer Schulter (56), welche die Erweiterung der Bohrung (24) begrenzt, und einem starren Ring (58) eingespannt ist, welcher am Rand der Erweiterung verstemmt ist,

daß die Feder (52) ein erstes in axialer Richtung vorgespanntes Federelement (52a) und ein zweites in radialer Richtung vorgespanntes Federelement (52b) aufweist,

daß das erste Federelement (52a) eine Wendelfeder und das zweite Federelement (52b) ein geschlitzter Ring ist, und

daß die Erweiterung der Bohrung (24) konisch ist, und daß das zweite Federelement (52b) eine zu der Erweiterung komplementäre konische Fläche (70) aufweist.

2. Teilbelag-Scheibenbremse nach Anspruch 1, dadurch gekennzeichnet, daß das zweite Federelement (52b) durch das erste Federelement (52a) zumindest in radialer Richtung gedrückt wird.

3. Teilbelag-Scheibenbremse nach einem der Ansprüche 1 oder 2, dadurch gekennzeichnet, daß das zweite Federelement (52b) durch das erste Federelement (52a) in axialer Richtung gedrückt wird.

4. Teilbelag-Scheibenbremse nach einem der vorhergehenden Ansprüche, dadurch gekennzeichnet, daß das zweite Federelement (52b) an der konischen Fläche (70) derart abgestützt ist, daß eine radiale, nach innen gerichtete Kraftkomponente entsteht.

5. Teilbelag-Scheibenbremse nach einem der vorhergehenden Ansprüche, dadurch gekennzeichnet, daß das zweite Federelement (52b) das erste Federelement (52a) zumindest teilweise umhüllt.

6. Teilbelag-Scheibenbremse nach einem der vorhergehenden Ansprüche, dadurch gekennzeichnet, daß die Feder (52) bzw. das zweite Federelement (52b) aus Gummi oder elastischem Kunststoff bestehen.

**Revendications**

1. Frein à disque à garniture partielle, notamment pour des véhicules automobiles, avec

un étrier flottant (30), qui est guidé en déplacement sur un support de frein (20) à l'aide d'axes coulissants (26),

un segment de frein intérieur et un segment de frein extérieur (40, 42), qui peuvent être déplacés parallèlement aux axes coulissants (26) par rapport au support de frein (20),

un dispositif d'actionnement (32), qui permet d'actionner le segment de frein intérieur (40) directement, et le segment de frein extérieur (42) en déplaçant l'étrier flottant (30), et

un dispositif de rappel sur au moins un des axes coulissants (26), avec un ressort (52) qui est disposé tout autour de l'axe coulissant (26) comme élément d'un assemblage par frottement entre cet axe coulissant et un perçage (24) qui le guide et qui est élastiquement flexible de manière limitée dans le sens axiale,

le perçage (24) présentant, à une extrémité à partir de laquelle l'axe coulissant (26) correspondant est inséré dans le perçage, un élargissement dans lequel le ressort est monté avec précontrainte, caractérisé

en ce qu'une face extérieure de l'axe coulissant (26) coopère avec le ressort (52) avec une précontrainte,

en ce que le ressort (52) est encastré entre un épaulement (56), qui délimite l'élargissement du perçage (24), et une bague rigide (58) qui est matée sur le bord de l'élargissement,

en ce que le ressort (52) présente un premier élément de ressort (52a) précontraint dans le sens axial et un deuxième élément de ressort (52b) précontraint dans le sens radial,

en ce que le premier élément de ressort (52a) est un ressort spiral et le deuxième élément de ressort (52b) un anneau fendu, et

en ce que l'élargissement du perçage (24) est conique, et en ce que le deuxième élément de ressort (52b) présente une face conique (70) complémentaire de l'élargissement.

2. Frein à disque à garniture partielle selon la revendication 1, caractérisé en ce que le deuxième élément de ressort (52b) est comprimé au moins dans le sens radial par le premier élément de ressort (52a).

3. Frein à disque à garniture partielle selon la revendication 1 ou 2, caractérisé en ce que le deuxième élément de ressort (52b) est comprimé dans le sens axial par le premier élément de ressort (52a).

4. Frein à disque à garniture partielle selon l'une des revendications précédentes, caractérisé en ce que le deuxième élément de ressort (52b) est appuyé contre la face conique (70) de manière à produire une composante de force radiale, dirigée vers l'intérieur.

5. Frein à disque à garniture partielle selon l'une des revendications précédentes, caractérisé en ce que le deuxième élément de ressort (52b) enveloppe au moins partiellement le premier élément de ressort (52a).

6. Frein à disque à garniture partielle selon l'une des revendications précédentes, caractérisé en ce que le ressort (52) ou encore le deuxième élément de ressort (52b) est réalisé en caoutchouc ou en matière plastique élastique.

**Claims**

1. Spot-type disc brake, in particular for motor vehicles, comprising,

a floating caliper (30) which is displaceably guided on a brake support (20) by means of sliding pins (26),

an inner and an outer brake pad (40, 42) which are displaceable parallel to the sliding pins (26) with respect to the brake support (20),

an actuator (32) with which the inner brake pad (40) is operable directly and the outer brake pad (42) by displacement of the floating caliper (30) and

a resetting means on at least one of the sliding pins (26) including a spring (52) which is arranged around the sliding pin (26) as part of a frictional connection between said pin and a bore (24) guiding said pin and is resiliently yieldable to a limited extent in the axial direction,

the bore (24) comprising at one end, from which the associated sliding pin (26) is inserted into said bore, a widening in which the spring is installed with bias, characterized in

that an outer surface of the sliding pin (26) cooperates with the spring (52),

that the spring (52) is clamped between a shoulder (56) defining the widening of the bore (24) and a rigid ring (58) which is crimped at the edge of the widening,

that the spring (52) comprises a first spring element (52a) biased in the axial direction and a second spring element (52b) biased in the radial direction,

that the first spring element (52a) is a helical spring and the second spring element (52b) is a slit ring, and

that the widening of the bore (24) is conical and that the second spring element (52b) has a conical face (70) complementary to the widening.

2. Spot-type disc brake according to Claim 1, characterized in that the second spring element (52b) is pressed by the first spring element (52a) at least in the radial direction.

3. Spot-type disc brake according to any one of Claims 1 or 2, characterized in that the second spring element (52b) is pressed by the first spring element (52a) in axial direction.

4. Spot-type disc brake according to any one of the preceding Claims, characterized in that the second spring element (52b) is supported at the conical face (70) in such a manner that a radially inwardly directed force component arises.

5. Spot-type disc brake according to any one of the preceding Claims, characterized in that the second spring element (52b) at least partially surrounds the first spring element (52a).

6. Spot-type disc brake according to any one of the preceding Claims, characterized in that the spring (52) of the second spring element (52b) consists of rubber or resilient material.

FIG.1

FIG.2

FIG.3

FIG.4

FIG.5

FIG.6